# EUROPÄISCHE PATENTSCHRIFT

(11) **EP 2 521 702 B1**
(45) Veröffentlichungstag und Bekanntmachung des Hinweises auf die Patenterteilung: **25.11.2015**
(21) Anmeldenummer: 10810846.5
(22) Anmeldetag: 30.12.2010
(51) Int. Cl.: C04B 35/573, C04B 41/50, F16C 33/04, F16C 33/16

(54) **VERFAHREN ZUR HERSTELLUNG VON WÄLZLAGERBAUTEILEN ZUMINDEST TEILWEISE AUS SILIZIUMKARBIDGEFÜGE**
METHOD FOR PRODUCING ROLLING BEARING COMPONENTS AT LEAST PARTIALLY MADE OF A SILICON CARBIDE MICROSTRUCTURE
PROCÉDÉ PERMETTANT DE FABRIQUER DES COMPOSANTS DE ROULEMENT AYANT, AU MOINS PARTIELLEMENT, UNE STRUCTURE EN CARBURE DE SILICIUM

(30) Priorität: 04.01.2010 DE 102010004017
(43) Veröffentlichungstag der Anmeldung: 14.11.2012
(73) Patentinhaber: Universität Paderborn, 33098 Paderborn (DE)
(72) Erfinder: GREULICH-WEBER, Siegmund, 33175 Bad Lippspringe (DE)
(74) Vertreter: Schneider, Uwe
(86) Internationale Anmeldenummer: PCT/DE2010/001531
(87) Internationale Veröffentlichungsnummer: WO 2011/079842

(56) Entgegenhaltungen:
- WO-A2-2008/061521
- GB-A- 1 300 664
- GB-A- 1 417 134
- VAN DIJEN F K ET AL: "Chemical reaction engineering aspects of a rotary reactor for carbothermal synthesis of SiC", JOURNAL OF THE EUROPEAN CERAMIC SOCIETY, ELSEVIER SCIENCE PUBLISHERS, BARKING, ESSEX, GB, Bd. 5, Nr. 1, 1. Januar 1989 (1989-01-01), Seiten 55-61, XP024175186, ISSN: 0955-2219, DOI: DOI:10.1016/0955-2219(89)90009-5 [gefunden am 1989-01-01]
- J.E.ATWATER ET AL.: "Preparation of silicon-carbide-coated activated carbon using a high-temperature fluidized bed reactor", CHEMICAL ENGINEERING SCIENCE, Bd. 56, 2001, Seiten 2685-2693, XP002633116,

## Beschreibung

Die Erfindung betrifft ein Verfahren zur Herstellung von Wälzlagerbauteilen zumindest teilweise aus Siliziumkarbidgefüge aus einem Rohling aus einem kohlenstoffhaltigen Material gemäß Oberbegriff des Anspruches 1.

Die Herstellung von Gegenständen, etwa Bauteilen oder auch Verschleißteilen, ganz oder teilweise aus Siliziumkarbid ist derzeit äußerst aufwändig, da Siliziumkarbid ein sehr hochfester Stoff ist, der sich nur sehr schwer formen oder mechanisch bearbeiten lässt. Siliziumkarbid ist eine nichtoxidische Hochtemperaturkeramik, die besonders durch ihre hervorragenden Eigenschaften, wie u.a. hohe Diamant-ähnliche Härte, optische Transparenz, Halbleiter-Charakter, hohe thermische Leitfähigkeit, chemische und thermische Haltbarkeit von großem Interesse ist und daher in vielen verschiedenen Bereichen der Technik, z.B. der Herstellung von Feuerfestwerkstoffen, Isolatoren wie auch als Halbleitermaterial zum Einsatz kommt. Daher hat die Herstellung von Gegenständen aus Siliziumkarbid eine hohe wirtschaftliche Bedeutung.

Üblicherweise werden Gegenstände aus Siliziumkarbid mittels herkömmlicher Sinterverfahren hergestellt, bei denen ein fest gemahlenes Siliziumkarbid-Pulver unter Verwendung unterschiedlicher Bindemittel bei hohen Temperaturen zusammen gebacken wird. Nachteilig an dieser Vorgehensweise ist neben den benötigten hohen Temperaturen und langen Sinterzeiten die Porosität der entstehenden Gegenstände, die einen Einsatz nur für bestimmte Anwendungen zulässt.

Aus der DE 33 22 060 A1 ist ein anderes Herstellungsverfahren für Gegenstände aus Siliziumkarbid bekannt, bei dem ein Gegenstand aus einem kohlenstoffhaltigen Material wie Graphit maß- und formgetreu hergestellt wird und anschließend mittels Diffusionsvorgängen während einer langdauernden Glühbehandlung der Kohlenstoff des Gegenstandes zumindest oberflächennah durch Siliziumkarbid ersetzt wird. Hierzu wird der Gegenstand beim Glühen in ein Granulat aus Siliziumdioxid eingepackt und beim Glühen z.B. Wasserstoffgas über das Granulat geleitet. Hierdurch soll ein Gas mit nennenswertem Siliziummonoxidanteil erzeugt werden, das dann in das kohlenstoffhaltige Material des Gegenstandes oberflächennah eindiffundieren kann und mit dem Kohlenstoff des Gegenstandes derart reagiert, dass sich in der Matrix des Gegenstandes Siliziumkarbid bildet. Hierdurch kann zumindest oberflächennah ein Austausch des Kohlenstoffs des Gegenstandes gegen Siliziumkarbid erreicht werden, wodurch eine entsprechende Verbesserung der oberflächennahen Bereiche des Gegenstandes erzielt werden können. Nachteilig an dieser Verfahrensweise ist es, dass die Erzeugung des Siliziummonoxidgases aufwändig ist und die notwendigen Mengenanteile des Siliziummonoxid in diesem Gas nur schwer einzuhalten und zu dosieren sind.

Weiterhin ist es aus der DE 10 2006 055 469 A1 und aus der WO 2008/061521 A2 bekannt, Gegenstände zumindest teilweise mit Siliziumkarbidgefüge aus einem Rohling aus einem kohlenstoffhaltigen Material herzustellen, indem in einem ersten Schritt der Gegenstand aus dem kohlenstoffhaltigen Material im wesentlichen gemäß seiner gewünschten Endform und/oder Endmaße hergestellt wird, und anschließend der Gegenstand aus dem kohlenstoffhaltigen Material entweder mit einem kohlenstoffreichen Siliziumdioxid-Granulat zumindest bereichsweise umhüllt und in dieser Umhüllung in einer Schutzgasatmosphäre bei einer Glühtemperatur mindestens einmal geglüht wird, oder der Gegenstand mit einem Silizium und Kohlenstoff enthaltenden Precursor-Sol infiltriert und in einer Schutzgasatmosphäre bei einer Glühtemperatur zur Durchführung einer karbothermalen Reduktion mindestens einmal geglüht wird, wodurch entweder das Siliziumdioxid-Granulat siliziumkarbidhaltiges Gas abgibt, das in den Gegenstand eindringt und das kohlenstoffhaltige Material teilweise oder ganz in Siliziumkarbid umwandelt oder durch das infiltrierte Precursor-Sol das Material des Gegenstandes teilweise oder ganz in Siliziumkarbid umgewandelt wird. Der Vorteil beider Verfahren ist die Entstehung des siliziumkarbidhaltigen Gases direkt in oder an den Bereichen des Gegenstandes, die in ein Siliziumkarbidgefüge umgewandelt werden sollen. Damit wird die ursprüngliche weiche Kohlenstoffmatrix des Gegenstandes ganz oder teilweise in eine harte Siliziumkarbid-Matrix umgewandelt und der Gegenstand erhält damit partiell oder ganz die vorteilhaften Eigenschaften des Siliziumkarbid. Da mit dieser Umwandlung der Matrix keine wesentlichen Form- und Maßänderungen des Gegenstandes einher gehen, kann der Gegenstand nach der Umwandlung direkt ohne weitere Nachbearbeitungen eingesetzt werden. Der hergestellte Gegenstand entspricht dem ursprünglichen Graphit-Abbild und besteht teilweise oder auch komplett aus hartem polykristallinem porösen Siliziumkarbid.

Dieser in der DE 10 2006 055 469 A1 bzw. der WO 2008/061521 A2 beschriebene Verfahrensablauf ist primär auf die Herstellung von einzelnen Gegenständen ausgelegt. Bei der Herstellung von Gegenständen mit Siliziumkarbidgefüge, wie sie z.B. für die Herstellung von Wälzlagerbauteilen besonders vorteilhaft eingesetzt werden könnten, entstehen jedoch verfahrensrelevante Probleme. Derartige Wälzlagerbauteile aufweisend ein Siliziumkarbidgefüge haben hinsichtlich ihres Einsatzes große Vorteile, da die vornehmlich durch Abrasion und statische/dynamische Belastungen belasteten Wälzlagerbauteile wie etwa Kugellagerkugeln, Wälzelemente wie Nadeln, Tonnen oder dgl. in sonstigen Wälzlager bei Verwendung von Wälzlagerbauteilen mit Siliziumkarbidgefüge wesentlich längere Standzeiten und damit wesentlich längere Lebensdauern der daraus hergestellten Wälzlager aufweisen könnten.

Derartige Wälzlagerbauteile mit Siliziumkarbidgefüge sind zwar grundsätzlich schon bekannt, weisen in der Praxis aber verschiedene Nachteile auf. Zum einen sind derartige Wälzlagerbauteile aufgrund der komplizierten und zeitaufwändigen Herstellungsverfahren teilweise sehr teuer, zum anderen ist etwa bei der Gasinfiltration gemäß der GB 1 300 664 A1 die Eindringtiefe des Gases und damit die Umwandlung des kohlenstoffhaltigen Materials in Siliziumkarbidgefüge begrenzt. Es bilden sich damit Gegenstände etwa auch für Wälzlagerbauteile aus, die außen eine relativ dünne, hochfeste Schicht aus einem Siliziumkarbidgefüge aufweisen, unterhalb derer das kohlenstoffhaltige Material weitgehend nicht umgewandelt vorliegt. Dies kann dazu führen, dass die relativ dünne Schicht aus einem Siliziumkarbidgefüge auf dem wesentlich weicheren Kern aus kohlenstoffhaltigem Material bei Belastungen unzulässig verformt wird und dadurch abplatzen kann. Auch sind die mechanischen Eigenschaften derartig aufgebauter Wälzlagerbauteile nicht ausreichend für die teilweise hohen mechanischen Belastungen. Ein weiterer Nachteil kann darin gesehen werden, dass z.B. aus vollständig aus Siliziumkarbidgefüge mechanisch hergestellte Wälzlagerbauteile sehr starr sind und z.B. dynamische Belastungen wie Stöße auf das Wälzlager wesentlich schlechter aushalten können, als dies etwa bei Wälzlagerbauteilen aus Stahl der Fall ist.

Aufgabe der vorliegenden Erfindung ist es daher, verbesserte Herstellungsverfahren für Wälzlagerbauteile aus Siliziumkarbid anzugeben, bei denen Wälzlagerbauteile wie Lagerschalen und insbesondere Wälzelemente wie Wälzlagerkugeln, Wälzlagernadeln oder dgl. aus kohlenstoffhaltigem Material oder einem porösen Siliziumkarbid einfach und sicher ganz oder teilweise in Siliziumkarbid umgewandelt werden können.

Die Lösung der erfindungsgemäßen Aufgabe ergibt sich aus den kennzeichnenden Merkmalen des Anspruches 1 in Zusammenwirken mit den Merkmalen des jeweiligen Oberbegriffes. Weitere vorteilhafte Ausgestaltungen der Erfindung ergeben sich aus den Unteransprüchen.

Die Erfindung gemäß Anspruch 1 geht aus von einem Verfahren zur Herstellung von Wälzlagerbauteilen zumindest teilweise aus Siliziumkarbidgefüge, wobei ein Wälzlagerbauteil aus einem Rohling aus einem kohlenstoffhaltigen Material gebildet wird und in einem ersten Schritt das Wälzlagerbauteil aus dem kohlenstoffhaltigen Material im wesentlichen gemäß seiner gewünschten Endform und/oder Endmaße hergestellt wird, und anschließend das Wälzlagerbauteil mit einem Silizium und Kohlenstoff enthaltenden Precursor-Sol infiltriert oder mit einem kohlenstoffreichen Siliziumdioxid-Granulat zumindest bereichsweise umhüllt wird, und das Wälzlagerbauteil danach in einem Behandlungsraum in einer Schutzgasatmosphäre mindestens einmal geglüht wird, wobei das Material des Wälzlagerbauteils entweder durch das infiltrierte Precursor-Sol teilweise oder ganz in Siliziumkarbid umwandelt wird oder das Siliziumdioxid-Granulat siliziumkarbidhaltiges Gas abgibt, das in das Wälzlagerbauteil eindringt und das kohlenstoffhaltige Material teilweise oder ganz in Siliziumkarbid umwandelt. Hierbei wird das Wälzlagerbauteil während der Umwandlung in dem Behandlungsraum derart bewegt, dass die Lage des Wälzlagerbauteils in dem Behandlungsraum sich immer wieder verändert, indem das Wälzlagerbauteil in jedem Moment der Umwandlung nur auf einem kleinen Auflagerungsbereich in dem Behandlungsraum aufliegt und dieser kleine Auflagerungsbereich sich ständig ändert.

Das erfindungsgemäße Verfahren geht aus von den Verfahren gemäß der DE 10 2006 055 469 A1 bzw. der WO 2008/061521 A2 der selben Anmelderin. Insbesondere hinsichtlich der Verfahrensführung sowie der einzelnen Verfahrensparameter und der verwendeten Materialien des auch hier verwendeten grundlegenden Verfahrensablaufs wird auf die DE 10 2006 055 469 A1 und die WO 2008/061521 A2 verwiesen. Insofern sollen im weiteren vorrangig die verfahrensgemäßen Unterschiede, Weiterentwicklungen und Anpassungen der in der DE 10 2006 055 469 A1 und der WO 2008/061521 A2 beschriebenen Verfahren speziell zur Herstellung von Wälzlagerbauteilen beschrieben und ansonsten auf die DE 10 2006 055 469 A1 bzw. die WO 2008/061521 A2 verwiesen werden.

Bei der Herstellung von Wälzlagerbauteilen, die üblicherweise in großer Stückzahl und bei gleichzeitig relativ kleinen Abmessungen benötigt werden, ist die praktische Umsetzung des Herstellverfahrens gemäß der DE 10 2006 055 469 A1 bzw. die WO 2008/061521 A2 von entscheidender Bedeutung für die Wirtschaftlichkeit und damit die praktische Umsetzbarkeit des Verfahrens. Es ist daher zu fordern, dass anders als in der DE 10 2006 055 469 A1 bzw. der WO 2008/061521 A2 beschrieben eine Anzahl von Wälzlagerbauteilen gleichzeitig und in einem gemeinsamen Behandlungsraum hergestellt werden können. Diese gleichzeitige Herstellung darf jedoch die technischen Abläufe bei der Umwandlung des kohlenstoffhaltigen Materials des künftigen Wälzlagerbauteils nicht negativ beeinflussen. Dies bedeutet insbesondere, dass die Einwirkung des entstehenden siliziumkarbidhaltigen Gases auf den Rohling des künftigen Wälzlagerbauteils aus kohlenstoffhaltigem Material nicht beeinflusst werden darf, dass etwa Bereiche des Wälzlagerbauteils gar nicht oder in vermindertem Umfang von dem siliziumkarbidhaltigen Gas erreicht und umgewandelt werden können. Diese Forderung ergibt sich daraus, dass die Wälzlagerbauteile wie etwa Wälzlagerkugeln, Wälzlagernadeln oder sonstige übliche Wälzelemente aufgrund ihrer Wälzbewegung im späteren Wälzlager überall auf ihrer Wälzoberfläche die gleichen Eigenschaften aufweisen müssen, um nicht zu unzulässigen Abnutzungen einzelner Abschnitte ihrer Wälzflächen zu führen und damit einem vorzeitigen Lagerverschleiß hervorzurufen. Dies gilt ebenso für die die Wälzelemente führenden Wälzlagerbauteile wie Wälzlagerringe etc. die ebenfalls im Bereich ihrer die Wälzelemente führenden Flächen möglichst gleichmäßige Eigenschaften aufweisen sollen.

Werden nun eine Anzahl von z.B. Wälzlagerkugeln in einen üblichen Behandlungsraum wie in der DE 10 2006 055 469 A1 bzw. der WO 2008/061521 A2 beschreiben eingebracht und gemäß den dort beschriebenen Verfahren behandelt, so würden sich im Bereich der Auflagerung der Wälzlagerkugel auf z.B. dem Boden des Behandlungsraums durch die Zugänglichkeit des siliziumkarbidhaltigen Gases andere Umwandlungsverhältnisse in Siliziumkarbidgefüge ergeben als in den Bereichen der Wälzlagerkugel, die frei innerhalb des Behandlungsraums zugänglich angeordnet sind. Diese eingeschränkte oder veränderte Umwandlung in Siliziumkarbidgefüge führt dann aber bei der späteren Wälzbewegung der Wälzlagerkugel in einem Wälzlager zu Inhomogenitäten des Materials der Wälzlagerkugel und damit zu unterschiedlichen Materialbelastungen, die zu einem vorzeitigen Verschleiß oder auch zu einem vorzeitigen Versagen des Wälzlagers führen können.

Zur Vermeidung derartiger Inhomogenitäten bei der Umwandlung in Siliziumkarbidgefüge wird erfindungsgemäß vorgeschlagen, dass das Wälzlagerbauteil während der Umwandlung in dem Behandlungsraum derart bewegt wird, dass die Lage des Wälzlagerbauteils in dem Behandlungsraum sich immer wieder, vorzugsweise laufend verändert. Durch diese laufende Lageänderung des Wälzlagerbauteils wird dafür gesorgt, dass zwar in jedem Moment der Umwandlung des Wälzlagerbauteils ein kleiner Auflagerungsbereich anders als die frei zugänglichen Bereiche des Wälzlagerbauteils mit dem siliziumkarbidhaltigen Gas in Wechselwirkung treten und damit anders umgewandelt werden kann, dieser kleine Auflagerungsbereich ändert sich jedoch ständig. Damit werden über die gesamte Behandlungszeit gesehen alle Oberflächenbereiche des Wälzlagerbauteils gleichmäßig mit dem siliziumkarbidhaltigen Gas beaufschlagt und es ergeben sich damit homogene Umwandlungsverhältnisse über das ganze Wälzlagerbauteil. Werden in einen Behandlungsraum mehrere oder viele Wälzlagerbauteile gleichzeitig eingegeben, so ergeben sich die Umwandlung beschränkende Berührungen auch zwischen den einzelnen Wälzlagerbauteilen, die sich aber ebenfalls wie beschrieben durch die laufende Lageänderung des Wälzlagerbauteile im Behandlungsraum kompensieren lassen. Damit ist durch die erfindungsgemäße Weiterentwicklung gewährleistet, dass insbesondere eine Vielzahl von Wälzlagerbauteilen gleichzeitig und ohne praktisch relevante Beeinträchtigung der Umwandlungsverhältnisse gleichmäßig über ihrer gesamten Oberfläche in ein Siliziumkarbidgefüge umgewandelt werden können, wodurch die Wirtschaftlichkeit des Verfahrens wesentlich verbessert wird.

In einer ersten denkbaren Ausgestaltung kann die laufende Veränderung der Lage des Wälzlagerbauteils in dem Behandlungsraum bei der Umwandlung in Siliziumkarbidgefüge durch eine Gasströmung erfolgen. Eine solche Gasströmung, die vorteilhaft Verwirbelungen innerhalb des Behandlungsraums hervorruft, durch die die Lage der Wälzlagerbauteile sich laufend verändert, kann dabei entweder durch Zufuhr ständig neuen Gases und/oder durch Umwälzung eines den Behandlungsraum jeweils neu durchfließenden Gases erfolgen. Ein solches Gas kann etwa ein siliziumkarbidhaltigen Gas oder auch das Gas der Schutzgasatmosphäre sein. Die Strömung des Gases ist hierbei auf die Masse der Wälzlagerbauteile abzustimmen, so dass bei größeren und damit schwereren Wälzlagerbauteilen auch eine stärkere Strömung des Gases erforderlich wird. Denkbar ist es z.B. auch, keine kontinuierliche Strömung des Gases einzustellen, sondern eine stetige Abfolge von intensiven Gasstößen in den Behandlungsraum einzublasen, die dann auch größere Wälzlagerbauteile immer wieder in ihrer Lage ändern können.

In einer ersten Ausgestaltung der Gasströmung kann vorgesehen werden, dass das siliziumkarbidhaltige Gas zur Umwandlung des Wälzlagerbauteils im wesentlichen aus dem Silizium und Kohlenstoff enthaltenden Precursor-Sol oder dem kohlenstoffreichen Siliziumdioxid-Granulat entsteht. Dies lässt sich dadaurch erreichen, dass etwa das Gas der Schutzgasatmosphäre zur Bildung der beschriebenen Strömung genutzt wird. In einer anderen Ausgestaltung ist es aber auch denkbar, dass das im Behandlungsraum strömende siliziumkarbidhaltige Gas nur teilweise aus dem Silizium und Kohlenstoff enthaltenden Precursor-Sol oder dem kohlenstoffreichen Siliziumdioxid-Granulat entsteht und weiteres siliziumkarbidhaltiges Gas aus der Umgebung des Behandlungsraums zugeführt wird. Eine derartige Zuführung zusätzlichen siliziumkarbidhaltigen Gases, dass etwa auch getrennt von dem Behandlungsraum erzeugt und dann dem Kreislauf durch den Behandlungsraum zugesetzt werden kann, kann die Umwandlung des Wälzlagerbauteils verbessern und beschleunigen.

Es ist ebenfalls denkbar, dass die laufende Veränderung der Lage des Wälzlagerbauteils in dem Behandlungsraum bei der Umwandlung in Siliziumkarbidgefüge durch mechanische Mittel wie etwa bewegliche Elemente innerhalb des Behandlungsraums verursacht wird. So könnte beispielsweise eine Art Rührer die z.B. in einem Haufwerk oder einer flächigen Anordnung angeordneten Wälzlagerbauteile ständig umrühren und damit dafür sorgen, dass siliziumkarbidhaltiges Gas überall die gewünschte Umwandlung gleichmäßig hervorrufen kann. Auch wäre es denkbar, Teile der Wandungen des Behandlungsraums wie etwa den Boden des Behandlungsraums zu bewegen, so dass sich seine Bewegung auf die Wälzlagerbauteile überträgt. Die Art der mechanischen Bewegung hängt hierbei vornehmlich von der geometrischen Form der Wälzlagerbauteile ab.

Von wesentlichem Vorteil für die Anwendung des erfindungsgemäßen Verfahrens ist es, wenn das Wälzlagerbauteil, insbesondere ein Wälzkörper in einem inneren Bereich, nicht oder nur teilweise in Siliziumkarbidgefüge umgewandelt wird. Durch eine nur teilweise Umwandlung des Wälzlagerbauteils ist es möglich, die mechanischen Eigenschaften des Wälzlagerbauteils den voraussichtlichen Belastungen optimal anzupassen. So kann durch eine Beeinflussung der Schichtdicke bzw. des Volumens des umgewandelten Materials des Rohlings aus einem kohlenstoffhaltigen Material insbesondere die Elastizität des Wälzlagerbauteils beeinflusst werden, die insbesondere für Wälzlager von großer Bedeutung ist, die auch oder in besonderem Maße stoßartigen Belastungen unterliegen. Ähnlich wie bei Wälzelementen aus teilweise gehärtetem Stahl mit einem zähen und weicheren Kern und einer verschleißfesten Oberfläche können derart erfindungsgemäß hergestellte Wälzelemente, aber auch z.B. Wälzlagerringe oder dgl. gezielt in ihrem Festigkeitseigenschaften und ihrer Elastizität beeinflusst werden. Durch eine nur teilweise, z.B. schalenartig um einen weicheren Kern herum angeordnete Umwandlungszone des Rohlings aus einem kohlenstoffhaltigen Material in Siliziumkarbidgefüge kann das für Wälzelemente aus Stahl bekannte Elastizitätsverhalten der Wälzelemente auch nachgebildet werden, wobei gleichzeitig die besondere Verschleißfestigkeit der Oberfläche aus Siliziumkarbidgefüge erhalten bleibt.

Diese Eigenschaften können in einer ersten Ausgestaltung dadurch erreicht werden, dass das Wälzlagerbauteil nur teilweise mit dem Silizium und Kohlenstoff enthaltenden Precursor-Sol infiltriert wird und nur in den infiltrierten Bereichen auch tatsächlich eine Umwandlung in ein Siliziumkarbidgefüge erfolgt. Durch die Steuerung der Infiltration kann z.B. eine mehrere Millimeter dicke, außen liegende Schale etwa einer Kugellagerkugel erzeugt werden, von der ein weicherer Kern aus dem nichtumgewandelten Gefüge des Rohlings aus einem kohlenstoffhaltigen Material umschlossen wird. Diese Kombination von harter Schale und weicherem Kern weist dann das beschriebene vorteilhafte Elastizitätsverhalten auf.

In einer anderen Ausgestaltung kann das Wälzlagerbauteil nur in einem derartigen Maße/nur bereichsweise mit dem Siliziumdioxid-Granulat derart umhüllt werden, dass das aus dem Siliziumdioxid-Granulat entstehende siliziumkarbidhaltige Gas das Wälzlagerbauteil nicht ganz durchringt und das kohlenstoffhaltige Material nur bereichsweise, vorzugsweise schalenartig den Innenbereich des Wälzlagerbauteils umgebend, in Siliziumkarbid umwandelt. Auch hierdurch lässt sich der schon beschriebene schalenartige Aufbau erzeugen.

In einer weiteren Ausgestaltung ist es etwa auch denkbar, dass das Wälzlagerbauteil, insbesondere ein Wälzkörper, in einem inneren Bereich hohl ausgebildet wird. Wird etwa der Rohling aus einem kohlenstoffhaltigen Material innen hohl ausgebildet, so kann der schalenartige Rohling ganz oder wie vorstehend beschrieben auch nur teilweise in ein Siliziumkarbidgefüge umgewandelt werden, wodurch sich durch den hohlen Aufbau aber wieder ein verändertes Elastizitätsverhalten erreichen lässt. Derartige Wälzlagerbauteile dürften besonders elastisch ausgebildet und daher für Anwendungen prädestiniert sein, bei denen die Wälzlager hohen stoßartigen Lasten unterliegen. Gleichzeitig wird durch die dickschalige Umwandlung des Rohlings verhindert, dass wie bei anderen Verfahren zur Siliziumkarbidumwandlung auftretende Abplatzungen zu dünner Umwandlungsschichten bei stoßartigen Belastungen auftreten können.

Weiterhin ist es denkbar, dass sich durch die Zusammensetzung von Precursor und/oder Schutzgas eine Dotierung des Wälzlagerbauteils erreichen lässt, durch die die elektrische Leitfähigkeit des Materials des Wälzlagerbauteils beeinflusst wird. Dies kann für die Einsatzbedingungen des Wälzlagerbauteils von Wichtigkeit sein, z.B. um die elektrische Leitfähigkeit des Wälzlagerbauteils beim Einsatz in Windkrafträdern gezielt zu optimieren. Je nach Dotierung kann daher eine verbesserte Isolierung oder eine verbesserte Leitfähigkeit eingestellt werden.

In einer vorteilhaften Ausgestaltung kann ein Wälzlagerbauteil, insbesondere ein Wälzkörper in einem inneren Bereich, nicht oder nur teilweise in Siliziumkarbidgefüge umgewandelt sein. Hierdurch lassen sich wie schon beschrieben Wälzlagerbauteile herstellen, bei denen eine gezielte Beeinflussung der mechanischen Eigenschaften und insbesondere der Elastizität möglich wird, die bisher bei Wälzlagerbauteilen mit einem Siliziumkarbidgefüge nicht oder nicht hinreichend möglich war. Dabei ist es auch denkbar, dass das Wälzlagerbauteil, insbesondere ein Wälzkörper in einem inneren Bereich hohl ausgebildet ist und daher besonders elastisch durch die Verformung seines schalenartig den hohlen Kern umschließenden Materials aus Siliziumkarbidgefüge ausgelegt werden kann.

In weiterer Ausgestaltung kann die Elastizität insbesondere von Wälzkörpern als Wälzlagerbauteilen durch die Einstellung des Umwandlungsgrades in Siliziumkarbidgefüge beeinflusst werden. Je mehr Anteil des sehr harten, gleichzeitig aber auch recht starren Siliziumkarbidgefüges an der Gesamtmatrix des Wälzlagerbauteils vorliegt, umso weniger elastisch wird auch das gesamte Wälzlagerbauteil sein. Daher kann die Elastizität durch das Verhältnis von Abmessungen/Anordnung des in Siliziumkarbidgefüge umgewandelten Bereichs des Wälzlagerbauteils und des nicht in Siliziumkarbidgefüge umgewandelten Bereichs des Wälzlagerbauteils eingestellt werden, die durch die erfindungsgemäße Verfahrensführung in weiten Grenzen beeinflusst werden kann.

Weiterhin ist es vorteilhaft, dass die Elastizität eines hohlen Wälzlagerbauteils von den Abmessungen des inneren hohlen Bereichs des Wälzlagerbauteils im Verhältnis zu den gesamten Abmessungen des Wälzlagerbauteils sowie dem Grad der Umwandlung in ein Siliziumkarbidgefüge abhängt. Somit lassen sich viele Parameter zur Einstellung einer gewünschten Elastizität bei der Herstellung des Wälzlagerbauteils beeinflussen.

## Patentansprüche

1. Verfahren zur Herstellung von Wälzlagerbauteilen zumindest teilweise aus Siliziumkarbidgefüge, wobei ein Wälzlagerbauteil aus einem Rohling aus einem kohlenstoffhaltigen Material gebildet wird und in einem ersten Schritt das Wälzlagerbauteil aus dem kohlenstoffhaltigen Material im wesentlichen gemäß seiner gewünschten Endform und/oder Endmaße hergestellt wird, und anschließend
das Wälzlagerbauteil mit einem Silizium und Kohlenstoff enthaltenden Precursor-Sol infiltriert oder mit einem kohlenstoffreichen Siliziumdioxid-Granulat zumindest bereichsweise umhüllt wird, und das Wälzlagerbauteil danach in einem Behandlungsraum in einer Schutzgasatmosphäre mindestens einmal geglüht wird, wobei das Material des Wälzlagerbauteils entweder durch das infiltrierte Precursor-Sol teilweise oder ganz in Siliziumkarbid umwandelt wird oder das Siliziumdioxid-Granulat siliziumkarbidhaltiges Gas abgibt, das in das Wälzlagerbauteil eindringt und das kohlenstoffhaltige Material teilweise oder ganz in Siliziumkarbid umwandelt,
**dadurch gekennzeichnet, dass**
das Wälzlagerbauteil während der Umwandlung in dem Behandlungsraum derart bewegt wird, dass die Lage des Wälzlagerbauteils in dem Behandlungsraum sich immer wieder verändert, indem das Wälzlagerbauteil in jedem Moment der Umwandlung nur auf einem kleinen Auflagerungsbereich in dem Behandlungsraum aufliegt und dieser kleine Auflagerungsbereich sich ständig ändert.

2. Verfahren gemäß Anspruch 1, **dadurch gekennzeichnet, dass** die Veränderung der Lage des Wälzlagerbauteils in dem Behandlungsraum bei der Umwandlung in Siliziumkarbidgefüge durch eine Gasströmung erfolgt.

3. Verfahren gemäß Anspruch 2, **dadurch gekennzeichnet, dass** die Gasströmung Verwirbelungen innerhalb des Behandlungsraums hervorruft, durch die die Lage des Wälzlagerbauteils sich laufend verändert.

4. Verfahren gemäß einem der vorstehenden Ansprüche, **dadurch gekennzeichnet, dass** das siliziumkarbidhaltige Gas zur Umwandlung des Wälzlagerbauteils im wesentlichen aus dem Silizium und Kohlenstoff enthaltenden Precursor-Sol oder dem kohlenstoffreichen Siliziumdioxid-Granulat entsteht.

5. Verfahren gemäß einem der vorstehenden Ansprüche, **dadurch gekennzeichnet, dass** das im Behandlungsraum strömende siliziumkarbidhaltige Gas nur teilweise aus dem Silizium und Kohlenstoff enthaltenden Precursor-Sol oder dem kohlenstoffreichen Siliziumdioxid-Granulat entsteht und weiteres siliziumkarbidhaltiges Gas aus der Umgebung des Behandlungsraums zugeführt wird.

6. Verfahren gemäß einem der vorstehenden Ansprüche, **dadurch gekennzeichnet, dass** die laufende Veränderung der Lage des Wälzlagerbauteil in dem Behandlungsraum bei der Umwandlung in Siliziumkarbidgefüge durch mechanische Mittel wie etwa bewegliche Elemente innerhalb des Behandlungsraums verursacht wird.

7. Verfahren gemäß einem der vorstehenden Ansprüche, **dadurch gekennzeichnet, dass** das Wälzlagerbauteil, insbesondere ein Wälzkörper, in einem inneren Bereich nicht oder nur teilweise in Siliziumkarbidgefüge umgewandelt wird.

8. Verfahren gemäß Anspruch 7, **dadurch gekennzeichnet, dass** das Wälzlagerbauteil nur teilweise mit dem Silizium und Kohlenstoff enthaltenden Precursor-Sol infiltriert wird.

9. Verfahren gemäß Anspruch 7, **dadurch gekennzeichnet, dass** das Wälzlagerbauteil nur in einem derartigen Maße/nur bereichsweise mit dem Siliziumdioxid-Granulat derart umhüllt wird, dass das aus dem Siliziumdioxid-Granulat entstehende siliziumkarbidhaltige Gas das Wälzlagerbauteil nicht ganz oder bereichsweise unterschiedlich durchdringt und das kohlenstoffhaltige Material nur bereichsweise, vorzugsweise schalenartig den Innenbereich des Wälzlagerbauteils umgebend, in Siliziumkarbid umwandelt

10. Verfahren gemaß einem der vorstehenden Ansprüche, **dadurch gekennzeichnet, dass** das Wälzlagerbauteil, insbesondere ein Wälzkörper, in einem inneren Bereich hohl ausgebildet ist.

11. Verfahren gemäß einem der vorstehenden Ansprüche, **dadurch gekennzeichnet, dass** das Wälzlagerbauteil aus dem kohlenstoffhaltigen Material aus Graphit oder Glaskohle hergestellt wird.

12. Verfahren gemäß einem der vorstehenden Ansprüche, **dadurch gekennzeichnet, dass** durch die Zusammensetzung von Precursor und/oder Schutzgas eine Dotierung des Materials des Wälzlagerbauteils erreicht wird, durch die die elektrische Leitfähigkeit des Wälzlagerbauteils beeinflusst wird.

## Claims

1. Method for producing rolling bearing components at least partially made of a silicon carbide microstructure, wherein a rolling bearing component is formed from a blank of a material containing carbon and in a first step, the rolling-bearing component made of the material containing carbon is produced in substantial accordance with its desired final shape and/or final dimensions, and subsequently
the rolling bearing component is infiltrated with a precursor-sol containing a silicon and carbon or is at least region-wise coated with a carbon-rich silicon dioxide granulate, and the rolling bearing component is then annealed at least once in a treatment chamber in a protective gas atmosphere, wherein the material of the rolling bearing component is either partially or completely converted to silicon carbide by means of the infiltrated precursor-sol or the silicon dioxide granulate emits gas containing silicon carbide that penetrates into the rolling bearing component and convertes the material containing carbon partially or completely into silicon carbide,
**characterized in that**
the rolling bearing component is moved during the conversion in the treatment chamber in such a manner that the position of the rolling bearing component in the treatment chamber changes again and again while the rolling bearing component rests in every moment of conversion only on a small onlay area in the treatment chamber and this little onlay area changes constantly.

2. The method according to claim 1, **characterized in that** the change of the position of the rolling bearing component in the treatment chamber during the conversion into a silicon carbide microstructure is provided by means of a gas flow.

3. The method according to claim 2, **characterized in that** the gas flow causes turbulences within the treatment chamber by which the position of the rolling bearing component is changing constantly.

4. The method according to any one of the preceding claims, **characterized in that** the silicon carbide-containing gas for the conversion of the rolling bearing component is produced essentially of the precursor-sol containing silicon and carbon or the carbon-rich silicon dioxide granulate.

5. The method according to any one of the preceding claims, **characterized in that** the gas containing silicon carbide and flowing in the treatment chamber is only partially produced from the silicon and carbon containing precursor-sol or the carbon-rich silicon dioxide granulate and further gas containing silicon carbide is supplied from the environment of the treatment chamber.

6. The method according to any one of the preceding claims, **characterized in that** the current change of the position of the rolling bearing component in the treatment chamber during the conversion to silicon carbide microstructure is caused by mechanical means such as movable elements within the treatment chamber.

7. The method according to any one of the preceding claims, **characterized in that** the rolling bearing component, in particular a rolling element, is not or only partially converted into a silicon carbide microstructure in an inner region.

8. The method according to claim 7, **characterized in that** the rolling bearing component is only partially infiltrated with the precursor-sol.containing silicon and carbon.

9. The method according to claim 7, **characterized in that** the rolling bearing component is wrapped only to such an extent/only regionally with the silicon dioxide granulate that the gas containing silicon carbide resulting from the silicon dioxide granulate penetrates the rolling bearing component not completely or regionally different and the carbon containing material is only converted regionally, preferably shell-like surrounding the inner region of the rolling bearing component, into silicon carbide.

10. The method according to any one of the preceding claims, **characterized in that** the rolling bearing component, in particular a rolling element, is formed hollow in an inner region.

11. The method according to any one of the preceding claims, **characterized in that** the rolling bearing component is made of the material containing carbon from graphite or glassy carbon.

12. The method according to any one of the preceding claims, **characterized in that** by means of the composition of precursor and/or inert gas a doping of the material of the rolling bearing component is achieved, by which the electrical conductivity of the rolling bearing component is affected.

## Revendications

1. Procédé permettant de fabriquer des composants de roulement ayant, au moins partiellement une structure en carbure de silicium, dans lequel un composant de roulement basé sur une ébauche d'un matériau carboné est formé et dans une première étape, le composant de roulement du matériau carboné est produit essentiellement en se référant la forme finale souhaitée et/ou les dimensions finales, et en suite
le composant de roulement est infiltré avec un précurseur-sol contenant du silicium et du carbone ou est revêtue d'un granulat de silice riche en carbone au moins localement, et le composant de roulement est ensuite recuit au moins une fois dans une chambre de traitement dans une atmosphère de gaz protecteur, dans lequel le matériau de composant de roulement est converti par le précurseur-sol infiltré partiellement ou complètement en carbure de silicium ou le granulat de silice émet gaz contenant du carbure de silicium, qui pénètre dans le composant de roulement et converti le matériau carboné partiellement ou complètement en carbure de silicium,
**caractérisé en ce que**
le composant de roulement est déplacé pendant la conversion dans la chambre de traitement autant que la position de composant de roulement dans la chambre de traitement est changée sans cesse que le composant de roulement est soutenu à chaque moment de la conversion seulement sur une petite zone de onlay dans la chambre de traitement et cette petite zone de onlay change constamment.

2. Procédé selon la revendication 1, **caractérisé en ce que** la modification de la position du corps du composant de roulement dans la chambre de traitement pendant la conversion de la structure en carbure de silicium est effectué par un flux de gaz.

3. Procédé selon la revendication 2, **caractérisé en ce que** le flux de gaz dans la chambre de traitement cause une turbulence par laquelle la position de composant de roulement est changée constamment.

4. Procédé selon l'une quelconque des revendications précédentes, **caractérisé en ce que** le gaz contenant du carbure de silicium pour la conversion de le composant de roulement est produit essentiellement du précurseur-sol contenant silicium et carbone ou le granulat de silice riche en carbone.

5. Procédé selon l'une quelconque des revendications précédentes, **caractérisé en ce que** le gaz contenant du carbure de silicium circulant dans la chambre de traitement est produit juste partiellement par le précurseur-sol contenant silicium et carbone ou par le granulat de silice riche en carbone et en outre gaz au carbure de silicium est alimenté de l'environnement de la chambre de traitement.

6. Procédé selon l'une quelconque des revendications précédentes, **caractérisé en ce que** la modification en courant dans la position de composant de roulement dans la chambre de traitement est causée pendant la conversion en structure carbure de silicium par des éléments mécaniques à l'intérieur de chambre de traitement.

7. Procédé selon l'une quelconque des revendications précédentes, **caractérisé en ce que** le composant de roulement, en particulier un élément de roulement, est converti pas du tous ou seulement partiellement en structure carbure de silicium dans une zone intérieure.

8. Procédé selon la revendication 7, **caractérisé en ce que** le composant de roulement est infiltrée juste partiellement avec le précurseur-sol contenant silicium et carbone.

9. Procédé selon la revendication 7, **caractérisé en ce que** le composant de roulement est enveloppée juste d'une telle mesure/juste localement avec le granulat de silice de telle sorte que la gaz contenant du carbure de silicium résultant du granulat de silice, pénètre le composant de roulement pas complètement ou localement différentement et le matériau carboné est changé en carbure de silicium seulement localement, préférement en forme de coque enveloppant la zone intérieure du composant de roulement.

10. Procédé selon l'une quelconque des revendications précédentes, **caractérisé en ce que** le composant de roulement, en particulier un élément de roulement, est formé creux dans une zone intérieure.

11. Procédé selon l'une quelconque des revendications précédentes, **caractérisé en ce que** le composant de roulement du matériau carboné est constitué du graphite ou du carbone vitreux.

12. Procédé selon l'une quelconque des revendications précédentes, **caractérisé en ce que** par la composition du precurseur-sol et/ou du gaz protecteur une dopage du matériau du composant de roulement est obtenue, par lequel la conductivité électrique de composant de roulement est affecté.
